# EUROPEAN PATENT APPLICATION

(11) **EP 2 447 522 A1**
(43) Date of publication of application: **02.05.2012**
(21) Application number: 11187107.5
(22) Date of filing: 28.10.2011
(51) Int. Cl.: F03D 1/02, F03D 3/02

(54) **Contra-rotating generator**

(30) Priority: 29.10.2010 TW 099137378
(71) Applicant: Yang, Cheng-Wei, Hsinchu City 300 (TW)
(72) Inventor: Yang, Cheng-Wei, Hsinchu City 300 (TW)
(74) Representative: advotec.

(57) **Abstract**

A contra-rotating generator comprises a shaft body, a first fan blade set, a first induction unit, a second fan blade set, and a second induction unit. The first fan blade set and the second fan blade set is disposed at both end of the shaft body respectively and parallels to each other. The first induction unit is disposed in the shaft body, and the first fan blade set is connected to the first induction unit so that the first fan blade set can drive the first induction unit to rotate. The shaft body can be the axis for the fan blade set to rotate. The second induction unit is disposed in the shaft body opposite to the first induction unit, and the second fan blade set is connected to the second induction unit so that the second fan blade set can drive the second induction unit to rotate.

## Description

### CROSS-REFERENCE TO RELATED APPLICATION

This application claims the benefit of Taiwan Patent Application No. 099137378, filed on October 29, 2010, in the Taiwan Intellectual Property Office of the Republic of China, the disclosure of which is incorporated herein in its entirety by reference.

### BACKGROUND OF THE INVENTION

### 1. Field of the Invention

The present invention relates to a generator, and more particularly to a contra-rotating generator having dual fan blade sets for contra-rotation to achieve high efficient power generation.

### 2. Description of the Related Art

Electricity is indispensably important energy resource in modem life. Basic necessities of life must rely upon the electricity. Most present power generation manners, such as fire power, nuclear power, hydraulic power, tide power or wind power generation, etc., ultimately propel the fan blade sets through fluids. The fan blade set can be a fan set or a turbine set to drive a first induction unit, which may be an induction coil set that is also usually called a rotor, or a magnetic field that is usually called a stator as well, and a second induction unit, which may be a magnetic field that is also called a stator corresponding to the first induction unit, or the induction coil set that is usually called a rotor as well, to mutually affect to generate current, thereby achieving the effect of power generation.

The first induction unit and the second induction unit of the conventional power generation technique adapt a design in which "one fixes when one rotates". In the design, the higher the rotational speed of the first or second induction unit is, the greater the generating capacity of which is. Thus, if someone wants to increase the generating capacity under a condition of the same fan blade-fluid efficiency, the size (especially the diameters) of fan blades must be increased. However, increasing the size or rotational speed of fan blades would simultaneously increase the stress loading of fan blades during the rotation. In addition, increasing the rotational speed would also increase the friction loss of bearings. Therefore, when the size or rotational speed of fan blades is greater, the required manufacture technique is higher, and price is also higher. Under many considerations, fan blades may not be further changed.

In order to sufficiently increase the generating capacity of the fluid power generation (e.g. wind power generation or turbine power generation), and under the consideration of not increasing the difficulty and the cost of manufacturing, the inventor(s) of the present invention propose a contra-rotating generator as an implementation and basis of improving the above-mentioned flaws based on years of research and development and many practiced experience.

### SUMMARY OF THE INVENTION

In view of the shortcomings of the prior art, one objective of the present invention is to provide a contra-rotating generator to improve the generating capacity of conventional wind power generation or turbine power generation, and ease the encountered bottleneck of the processing technique while increasing the generating capacity.

According to one objective of the present invention, a contra-rotating generator is provided, including a shaft body, a first fan blade set, a first induction unit, a second fan blade set and a second induction unit. The first fan blade set is disposed at one end of the shaft body and rotates at a first speed by taking the shaft body as an axis. The first induction unit is disposed in the shaft body and connected to the first fan blade set, which drives the first induction unit to rotate. The second fan blade set is disposed at another end of the shaft body and is parallel to the first fan blade set. The second fan blade set has higher energy extraction rate than the first fan blade set. The second fan blade set rotates at a direction reversed to that of the first fan blade set at a second speed. The second induction unit is disposed in the shaft body opposite to the first induction unit and connected to the second fan blade set. The second fan blade set drives the second induction unit to rotate at a direction reversed to that of the first induction unit.

The shaft body is parallel to a direction of an approaching flow, and the first fan blade set is disposed at the end of the shaft body facing the approaching flow. The first fan blade set comprises a plurality of the first fan blades. One end of each of the first fan blade is disposed at the end of the shaft body in equivalent distances. The second fan blade set has higher energy extraction rate than the first fan blade set. The second fan blade set comprises a plurality of second fan blades. One end of each of the second fan blade is disposed at another end of the shaft body in equivalent distance. The attack angle or size of the first fan blade is different from the second fan blade, and the first fan blade and the second fan blade are coaxially disposed so that the first fan blade set and the second fan blade set rotate toward reverse directions at the first speed and the second speed respectively under the same approaching flow, and the second induction unit rotates relative to the first induction unit.

Wherein, the first induction unit has a plurality of induction magnets, and the second induction unit has a plurality of induction coils. Alternatively, the first induction unit has a plurality of induction coils, and the second induction unit has a plurality of magnets. The induction magnet is correspondingly disposed with the induction coil.

Wherein, the shaft body further has a third induction unit disposed between the first induction unit and the second induction unit. The third induction unit has a plurality of induction coils. The first induction unit and the second induction unit have a plurality of magnets, and each of the magnet is correspondingly disposed with each of the induction coil.

In addition, according to the objective of the invention, a contra-rotating generator is further provided and includes a shaft body, a first fan blade set, a first induction unit, a second fan blade set, and a second induction unit. The first fan blade set is disposed at the end of the shaft body and rotates at a first speed by taking the shaft body as an axis. The first induction unit is disposed in the shaft body and connected to the first fan blade set. The first fan blade set drives the first induction unit to rotate. The second fan blade set is disposed at another end of the shaft body and parallels the first fan blade set. The second fan blade set rotates at a direction reversed to that of the first fan blade set at a second speed by taking the shaft body as an axis. A second induction unit is disposed in the shaft body opposite to the first induction unit. The second induction unit is connected to the second fan blade set, which drives the second induction unit to rotate relative to the first induction unit.

Wherein, the shaft body is vertical to a direction of approaching flow, and the first fan blade set comprises a plurality of first fan blades and a plurality of first rack bodies. Each of the first fan blade is circularly disposed at the end of the shaft body in an equivalent distance by each of the first rack body so that each of the first fan blade parallels to the shaft body. The second fan blade set comprises a plurality of second fan blades and a plurality of second rack bodies. Each of the second fan blade is circularly disposed at another end of the shaft body in an equivalent distances by each of the second rack body so that each of the second fan blade parallels to the shaft body. The installation angles of the first fan blade set and the second fan blade set are different so that the rotation directions of the first fan blade and the second fan blade are different, and drive the second induction unit to rotate relative to the first induction unit.

Wherein, the first induction unit has a plurality of induction magnets, and the second induction unit has a plurality of induction coils. Alternatively, the first induction unit has a plurality of induction coils, and the second induction unit has a plurality of magnets. The induction magnets are correspondingly disposed with the induction coils.

Wherein, the shaft body further has a third induction unit disposed between the first induction unit and the second induction unit, and the third induction unit has a plurality of induction coils. The first induction unit and the second induction unit have a plurality of magnets, and each of the magnet is correspondingly disposed with each of the induction coil.

As described above, the contra-rotating generator according to the invention has one or more advantages as the following:

(1) The energy extraction rate for both fan blade sets in the contra-rotating generator is different by horizontally disposing the shaft body with the approaching flow and by varying the deflection angle or sizes or other designs of the fan blades of the two fan blade sets. Although the rotational speeds of each fan blade set is lower than the rotational speed of a conventional designed single-set fan blade, more than two folds of generating capacity can be generated. Alternatively, when the rotational speeds of each fan blade set are the same as the conventional designed single-set fan blades, about four folds of generating capacity can be obtained to greatly enhance the generating capacity of wind power or turbine power generation.

(2) As above, the contra-rotating generator, in which the shaft body is horizontally disposed with the approaching flow, not only improves the generating capacity, but also reduces the rotational speed of the fan blades and decreases the abrasion of the bearing, so as to reduce the difficulty of manufacturing the fan blades. Alternatively, the service life of the invented generator can be improved while using the same manufacturing art. These foregoing factors can effectively reduce costs of wind power or turbine power generation, thereby increasing the competition condition of wind power or turbine power generation.

(3) As above, the contra-rotating generator, in which the shaft body is horizontally disposed with the approaching flow, not only apply to wind power generation, but also applies to different kinds of fluid power generators, such as a turbine power generator of hydraulic, fire power, nuclear power, tide power generation. A goal of power generation at high efficiency can be achieved by the fluid flows through the contra-rotating fan blade sets coaxially disposed and having different energy extraction rates.

(4) By comparing with a vertical power generator, which has the same size (height and width) and adopts a conventional technique, the contra-rotating generator, in which the shaft is vertically disposed with the approaching flow, can obtain two to four folds of generating capacity by adapting the shaft body and the two fan blade sets mentioned in the foregoing paragraphs or several folds of generating capacity by adapting a plurality of shaft bodies and more than two fan blade sets mentioned in the foregoing paragraphs.

(5) As above, the contra-rotating generator, in which the shaft body is vertically disposed with the approaching flow, can also slightly reduce the rotational speed of the fan blades so that simultaneously enhances the generating capacity, reduces the abrasion, and simplifies the art of manufacturing fan blades, or increases the service life.

### BRIEF DESCRIPTION OF THE DRAWINGS

FIG. 1 is a schematic diagram of a first aspect of a first embodiment according to a contra-rotating generator of the present invention;

FIG. 2 is a schematic diagram of a second aspect of a first embodiment according to a contra-rotating generator of the present invention;

FIG. 3 is a schematic diagram of a first aspect of a second embodiment according to a contra-rotating generator of the present invention;

FIG. 4 is a top view of a first aspect of a second embodiment according to a contra-rotating generator of the present invention;

FIG. 5 is a lateral view of a second aspect of a second embodiment according to a contra-rotating generator of the present invention;

FIG. 6 is a schematic diagram of a third embodiment according to a contra-rotating generator of the present invention; and

FIG. 7 is a schematic diagram of a fourth embodiment according to a contra-rotating generator of the present invention.

### DETAILED DESCRIPTION OF THE PREFERRED EMBODIMENTS

The foregoing and other technical characteristics of the present invention will become apparent with the detailed description of the preferred embodiments and the illustration of the related drawings.

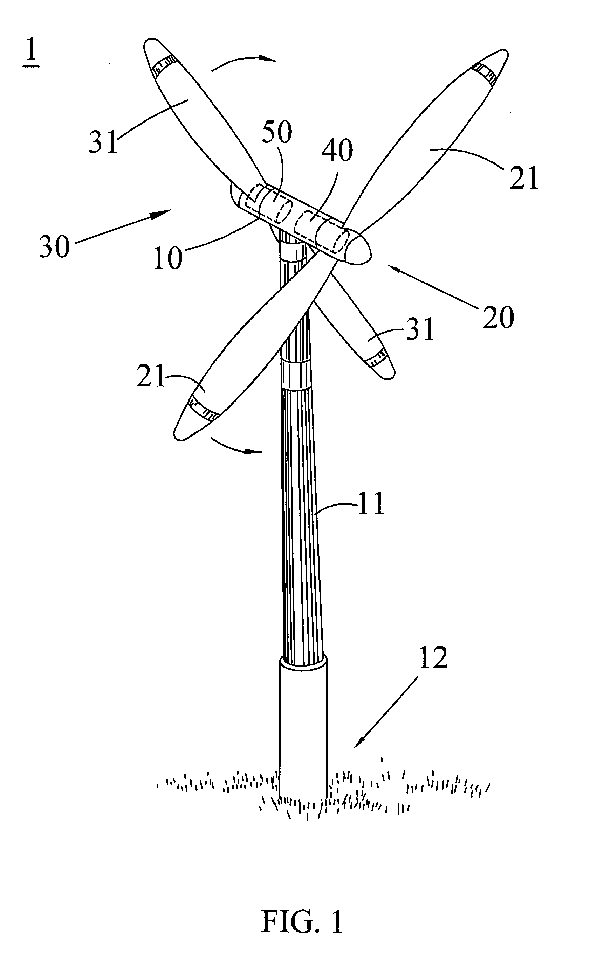

With reference to FIG. 1 for a schematic diagram of a first aspect of a contra-rotating generator according to a first embodiment of the invention, the contra-rotating generator 1 includes a shaft body 10, a first fan blade set 20, and a second fan blade set 30. The first fan blade set 20 and the second fan blade set 30 are respectively disposed at two ends of the shaft body 10. The shaft body 10 is horizontally disposed with a direction of an approaching flow, and the first fan blade set 20 is disposed to one end of the shaft body 10 facing the approaching flow while the second fan blade set 30 is disposed toward another end of the shaft body 10.

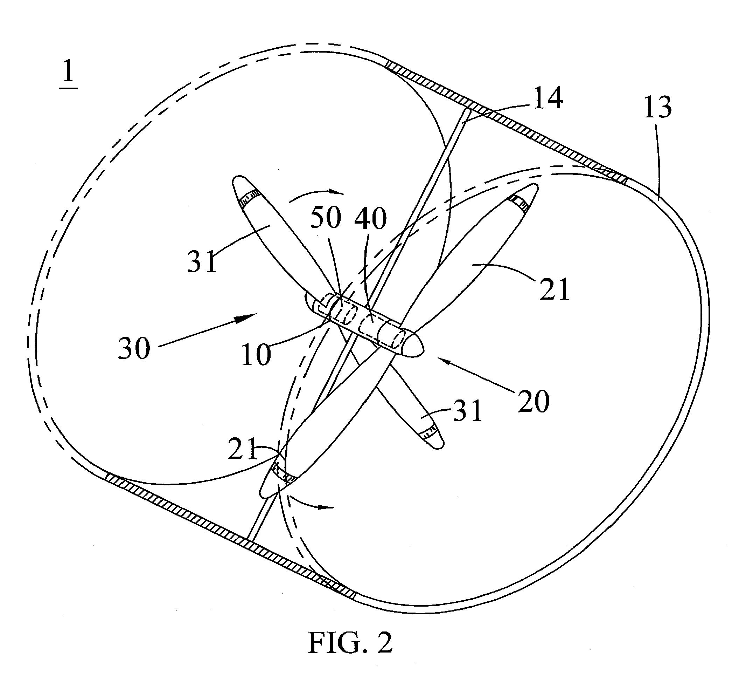

In the embodiment, in order to fasten the shaft body 10, a support rod 11 is further disposed. One end of the support rod 11 is fastened between the two ends of the shaft body 10 while another end of the support rod 10 is fastened on a plane 12 so that the shaft body 10 is vertical to the support rod 11 and in parallel to the plane 12 to form an aspect of the horizontal wind power generator and the first aspect of the embodiment, but not limited herein. It can also be a second aspect shown in FIG. 2. In a hollow tube body 13, the shaft body 10 is suspended and fastened at the axis in the hollow tube body 13 through a plurality of support racks 14 so as to be an aspect of a turbine power generator and a second aspect of the embodiment.

In the first embodiment, a first induction unit 40 and a second induction unit 50 are disposed in the shaft body 10, and the first induction unit 40 and the first fan blade set 20 are connected while the second induction unit 50 is connected to the second fan blade set 30. The first fan blade set 20 includes a plurality of first fan blades 21. One end of each of the first fan blade 21 is circularly disposed at one end of the shaft body 10 in equivalent distances. The second fan blade set 30 includes a plurality of second fan blades 31. One end of each of the second fan blade 31 is circularly disposed at another end of the shaft body in equivalent distances. The energy extraction rate of the first fan blade set 20 is lower than the second fan blade set 30.

In the embodiment, the attack angle or the size of the second fan blade 31 is greater than the first fan blade 21. Since the first fan blade set 20 and the second fan blade set 30 are coaxially disposed at two ends of the shaft body 10, the first fan blade set 20 and the second fan blade set 30 rotate at a reverse direction by taking the shaft body 10 as the axis when an approaching flow (e.g. wind or other working fluids) flows through the contra-rotating generator 1. In the embodiment, the first fan blade set 20 rotates in a counterclockwise direction while the second fan blade set 30 rotates in a clockwise direction, but not limited herein. It can also exchange the clockwise or counterclockwise direction. The first fan blade set 20 directly faces the approaching flow. The second fan blade set 30 receives the working fluid flowing through the first fan blade set 20. In application of wind power generation, a wind tracking device can be used to ensure the first fan blade set 20 always facing the approaching flow.

The "energy extraction rate" shown in the foregoing paragraphs is defined as a ratio for the energy extracted by the fan blade sets to the energy of the approaching flow, η ≡ ***E**_{fan}* /***E**_{flow}*, wherein *E_{flow}* and ***E**_{fan}* are the energy contained in the approaching flow and the energy from the approaching flow extracted by the fan blade sets respectively. The energy extraction rate of the first fan blade set 20 facing the approaching flow is η₁. The energy extraction rate of the second fan blade set 30 is η₂. Since the attack angle or the size of the second fan blade 31 is larger than the first fan blade 21 or other design, the η₂ is greater than the η₁ .

In a relationship between a rotor and a stator of a conventional power generator, the stator is usually stationary while the rotor rotates relative to the stator, wherein the stator is a magnet set, and the rotor is an induction coil set. An induction current is generated when the rotor rotates relative the stator, thereby achieve a goal of generating power. Alternatively, the stator, which is equivalent to a magnet set, rotates relative to the fixed rotor, which is equivalent to a coil set, to generate an induction current. In the first embodiment, the first induction unit 40 is represented by the induction coil. A second induction unit 50 is represented by a magnet disk. However, it can, but not limited herein, be exchanged in disposition. By coaxially disposing the first fan blade set 20 and the second fan blade set 30 at the two ends of the shaft body 10, the first induction unit 40 connected to the first fan blade set 20 and the second induction unit 50 connected to the second fan blade set 30 generate corresponding rotations. Under the same energy of the approaching flows (e.g. wind power), the generating capacity of the contra-rotating generator 1 is at least two folds while only using the second fan blade set with the same size and the conventional power generator design (the stator moves when the rotor does not, or vise versa) (Hereafter is so called "conventional design"). Simultaneously, the rotational speeds of the first and second fan blade sets are much lower than the rotational speed of the conventional arranged singlefan blade sets, the requirement of the processing precision for the fan blades and bearings is also low, or improved with service life under the same technique. In addition, under a condition of applying the same technique as the conventional design, the rotational speeds of the two fan blade sets are the same as the conventional design by enlarging the size of the fan blade sets. Thus, the service life is the same, but the generating capacity can be increased to about four folds.

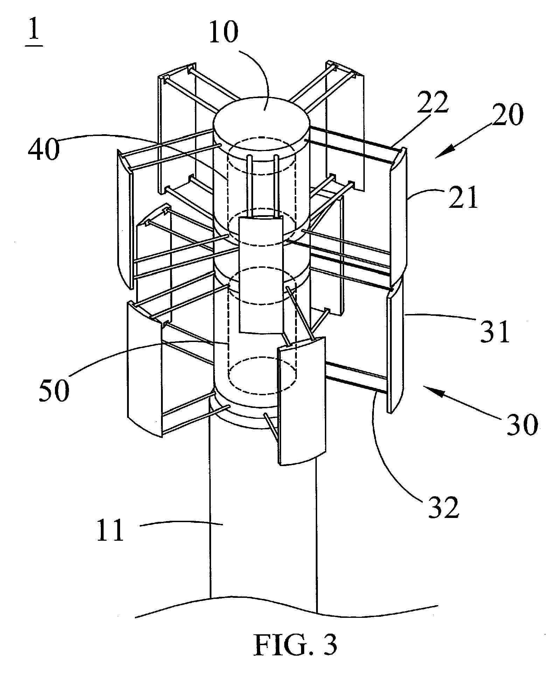

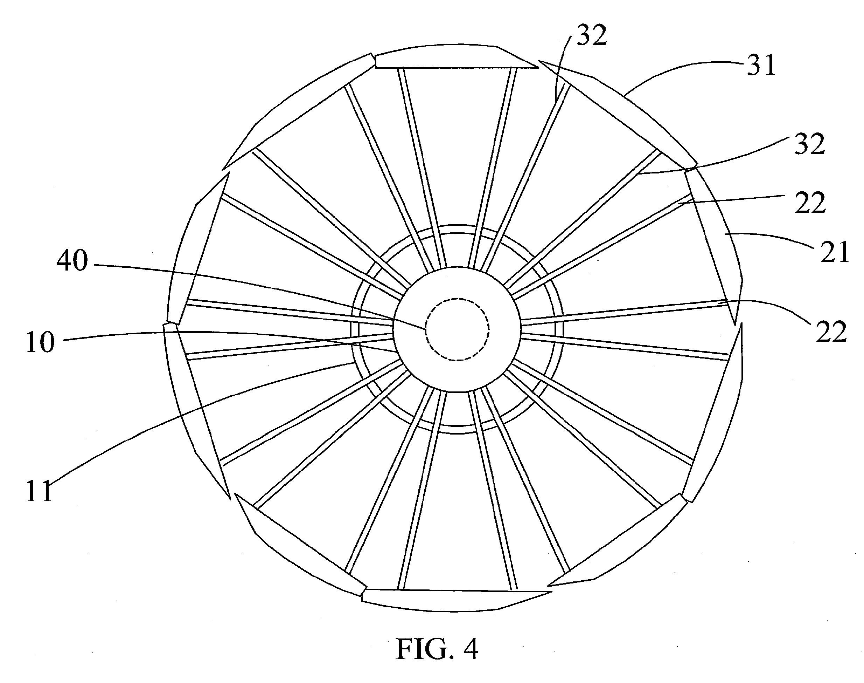

With reference to FIG. 3 and FIG. 4 for a schematic diagram and a top view of a first aspect of a contra-rotating generator according to a second embodiment of the present invention, in the second embodiment, the shaft body 10 is vertically disposed to a direction of the approaching flow. The first fan blade set 20 includes a plurality of first fan blades 21 and a plurality of first rack bodies 22. The second fan blade set 30 includes a plurality of second fan blades 31 and a plurality of second rack bodies 32.

To fasten the contra-rotating generator 1, one end of the shaft body 10 is disposed with a support rod 11 in the embodiment, and the shaft body 10 is vertical to the plane 12. The first fan blades 21 are circularly disposed to an end of the shaft body 10 in equivalent distances through the first rack body 22. The second fan blades 31 are circularly disposed to another end of the shaft body 10 in equivalent distances through the second rack body 32. In the figure, the second fan blade set 30 is, but not limited to, closer to the support rod 11 than the first fan blade set 20.

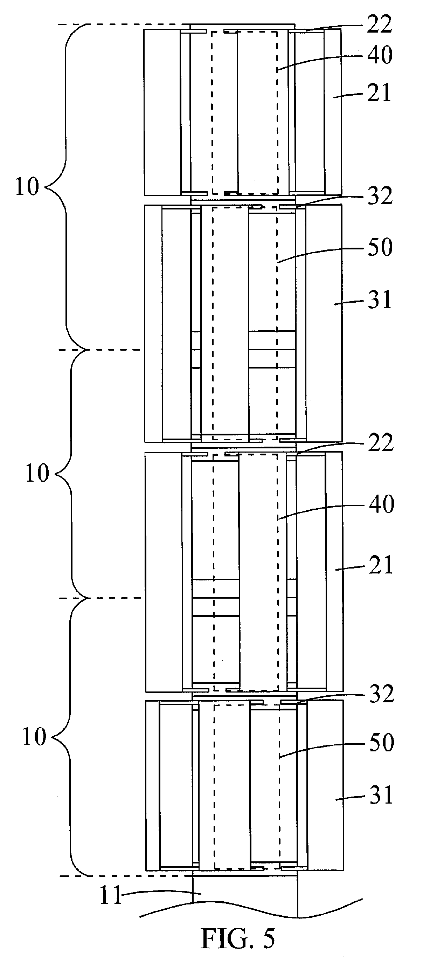

In the embodiment, the design parameters (sizes, etc.) of the first fan blade set and the second fan blade set can be the same or different. However, the reverse rotation direction can be ensured via different installation angles. With reference to FIG. 5 for a side view of a second aspect of a contra-rotating generator according to a second embodiment of the present invention, the second aspect uses the disposition of the fan blade sets in a quantity of N and the shaft bodies in a quantity of (N-1), and the rotation directions of adjacent fan blade sets are reversed. In FIG. 5, the first fan blade set 20 is connected to the first induction unit 40. The second fan blade set 30 is connected to the second induction unit 50, and the second induction unit 50 and the second fan blade set 30 are extended to the second set of shaft body 10 and so on. In the embodiment, three sets of the shaft body 10 are, but not limited to, incorporated with two sets each of the first fan blade set 20 and the second fan blade set 30. Numbers of the shaft body 10 and each fan blade set can be changed according to demands.

Although the disposition manners of the first embodiment and the second embodiment are different, the principle of power generation for both embodiments is the same. The first fan blade set 20 and the second fan blade set 30 are correspondingly disposed at two ends of the shaft body 10, and attack angles of the first fan blade 21 and the second fan blade 31 are different. When an approaching flow flows through the contra-rotating generator 1, the first fan blade 20 and the second fan blade 30 rotate toward a reverse direction by taking the shaft body 10 as the axis.

Further, since the first fan blade set 20 is correspondingly disposed with the second fan blade set 30 at two ends of the shaft body 10, and the installation angle of the second fan blade 31 is different from the first fan blade 21, the first induction unit 40 connected to the first fan blade set 20 and the second induction unit 50 connected to the second fan blade set 40 generate corresponding rotations. Under the same fluid energy (e.g. wind power), the generating capacity of the contra-rotating generator 1 with the correspondingly rotated fan blades is at least two folds to four folds while using the second fan blade set having the same size and the conventional design (the stator moves when the rotor does not, or vise versa).

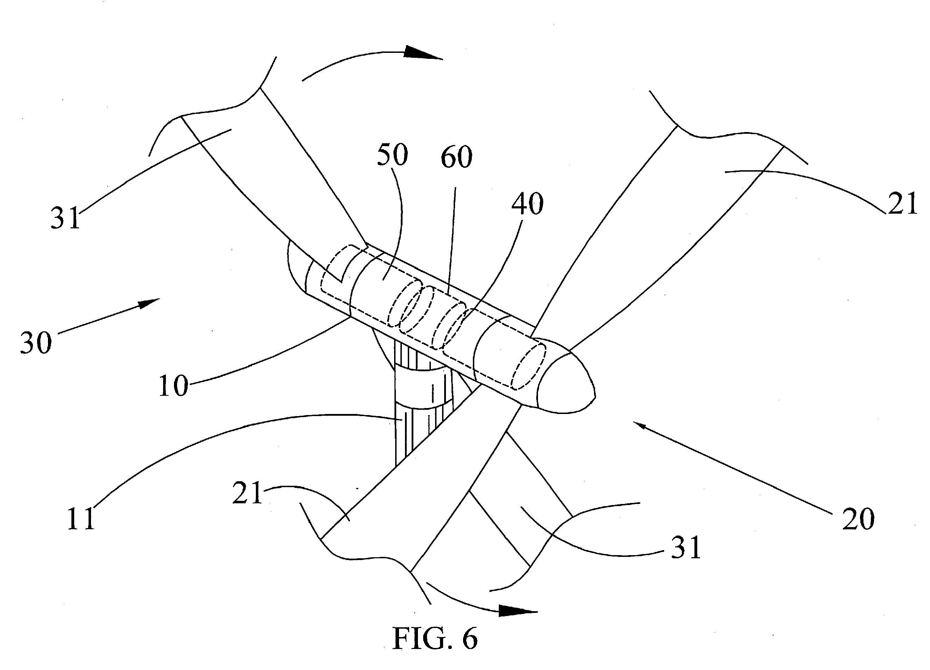

With reference to FIG. 6 for a schematic diagram of a contra-rotating generator according to a third embodiment of the present invention, the third embodiment is roughly the same as the first embodiment. The difference is only that the shaft body 10 further has a third induction unit 60 disposed between the first induction unit 40 and the second induction unit 50. In the embodiment, the third induction unit 60 is represented by induction coils, and the first induction unit 40 and the second induction unit 50 are represented by a magnet disc. The first fan blade set 20 drives the first induction unit 40 to rotate relative to the third induction unit 60. The second fan blade set 30 drives the second induction unit 50 to rotate relative to the third induction unit 60, and the rotation direction is reversed to the first induction unit 40 to achieve two to four folds of generating capacity comparing to the conventional design.

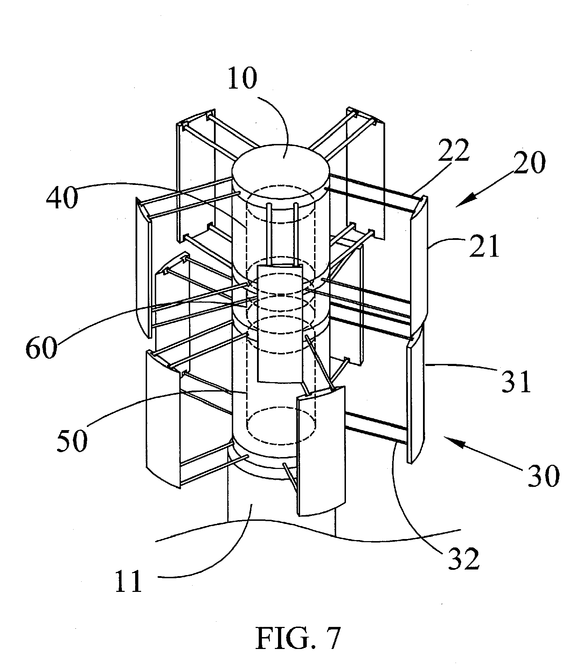

With reference to FIG. 7 for a schematic diagram of a contra-rotating generator according to a fourth embodiment of the invention, the fourth embodiment is roughly the same as the second embodiment, and the difference is only that the shaft body 10 further has a third induction unit 60 disposed between the first induction unit 40 and the second induction unit 50. In the embodiment that is the same as the third embodiment, the third induction unit 60 is represented by induction coils, and the first induction unit 40 and the second induction unit 50 are represented by magnet discs. The first fan blade set 20 drives the first induction unit 40 to rotate relative to the third induction unit 60, and the second fan blade set 30 drives the second induction unit 50 to rotate relative to the third induction unit 60. The rotation direction is reversed to the first induction unit 40 to achieve more than two folds of generating capacity comparing to the conventional design.

With the disposition of the contra-rotating generator according to the present invention, it does not only apply to wind power generation, but also apply the structure to different kinds of fluids. By driving the contra-rotated fan blades by fluids, the goal of power generation can be achieved.

The present invention improves over the prior art and complies with patent application requirements, and thus is duly filed for patent application. The above-mentioned is only exemplary, but not limited herein. While the invention has been described by device of specific embodiments, numerous modifications and variations could be made thereto by those generally skilled in the art without departing from the scope and spirit of the invention set forth in the claims.

## Claims

1. A contra-rotating generator comprising:
a shaft body (10);
a first fan blade set (20) disposed at one end of the shaft body (10) and rotating at a first speed by taking the shaft body (10) as an axis;
a first induction unit (40) disposed in the shaft body (10) and connected to the first fan blade set (20), the first fan blade set (20) driving the first induction unit (40) to rotate;
a second fan blade set (30) disposed at another end of the shaft body (10), the second fan blade set (30) having a higher energy extraction rate than the first fan blade set (20),
and being parallel to the first fan blade set (20), the second fan blade set (30) rotating at a direction reversed to that of the first fan blade set (20) at a second speed by taking the shaft body (10) as the axis; and
a second induction unit (50) disposed in the shaft body (10) opposite to the first induction unit (40) and connected to the second fan blade set (30), the second fan blade set (30) driving the second induction unit (50) to rotate relative to the first induction unit (40).

2. The contra-rotating generator as recited in claim 1, wherein the shaft body (10) is parallel to a direction of an approaching flow, and the first fan blade set (20) is disposed at the end of the shaft body (10) facing the approaching flow, the first fan blade set (20) comprises a plurality of first fan blades (21), one end of each of the first fan blade (21) is disposed at the end of the shaft body (10) in an equivalent distance.

3. The contra-rotating generator as recited in claim 1 or 2, wherein the second fan blade set (30) comprises a plurality of second fan blades (31), one end of each of the second fan blades (31) is disposed at the another end of the shaft body (10) in an equivalent distance.

4. The contra-rotating generator as recited in claim 3, wherein an attack angle or a size of the first fan blade (21) is different from the second fan blade (31), and the first fan blade (21) and the second fan blade (31) are coaxially disposed so that the first fan blade set (20) and the second fan blade set (30) respectively rotate toward reverse directions at the first speed and the second speed when affected by the same approaching flow, and the second induction unit (50) rotates reversely to the first induction unit (40).

5. The contra-rotating generator as recited in one of claims 1 to 4, wherein the first induction unit (40) has a plurality of induction coils, the second induction unit (50) has a plurality of induction magnets, and each of the induction magnet is correspondingly disposed with each of the induction coil.

6. The contra-rotating generator as recited in one of claims 1 to 5, wherein the first induction unit (40) has a plurality of induction magnets, the second induction unit (50) has a plurality of induction coils, and each of the induction magnet is correspondingly disposed with each of the induction coil.

7. The contra-rotating generator as recited in one of claims 1 to 6, wherein the shaft body (10) further disposes a third induction unit (60) between the first induction unit (40) and the second induction unit (50), and the third induction unit (60) has a plurality of induction coils, the first induction unit (40) and the second induction unit (50) have a plurality of magnets, and each of the magnet is correspondingly disposed with each of the induction coil.

8. A contra-rotating generator comprising:
a shaft body (10);
a first fan blade set (20) disposed at one end of the shaft body (10) and rotating at a first speed by taking the shaft body (10) as an axis;
a first induction unit (40) disposed in the shaft body (10) and connected to the first fan blade set (20), the first fan blade set (20) driving the first induction unit (40) to rotate;
a second fan blade set (30) disposed at another end of the shaft body (10) and being parallel to the first fan blade set (20), the second fan blade set (30) rotating at a direction reversed to that of the first fan blade set (20) at a second speed by taking the shaft body (10) as the axis; and
a second induction unit (50) disposed in the shaft body (10) opposite to the first induction unit (40) and connected to the second fan blade set (30), the second fan blade set (30) driving the second induction unit (50) to rotate relative to the first induction unit (40).

9. The contra-rotating generator as recited in claim 8, wherein the shaft body (10) is vertical to a direction of an approaching flow, and the first fan blade set (20) comprises a plurality of first fan blades (21) and a plurality of first rack bodies (22), each of the first fan blade (21) is circularly disposed at the end of the shaft body (10) in an equivalent distance by each of the first rack body (22) so that each of the first fan blade (21) is parallel to the shaft body (10).

10. The contra-rotating generator as recited in claim 8 or 9, wherein the second fan blade set (30) comprises a plurality of second fan blades (31) and a plurality of second rack bodies (32), and each of the second fan blades (31) is circularly disposed at the another end of the shaft body (10) in an equivalent distance by each of the second rack body (32) so that each of the second fan blades (31) is parallel to the shaft body (10).

11. The contra-rotating generator as recited in claim 10, wherein installation angles of the first fan blade (21) and the second fan blade (31) are different so that the rotation directions of the first fan blade (21) and the second fan blade (31) are different, and each of the first fan blade (21) and each of the second fan blade (31) are correspondingly disposed so that the first fan blade set (20) and the second fan blade set (30) respectively rotate toward reverse directions at the first speed and the second speed when affected by the same approaching flow, and the second induction unit (50) rotates reversely to the first induction unit (40).

12. The contra-rotating generator as recited in one of claims 8 to 11, wherein the first induction unit (40) has a plurality of induction coils, the second induction unit (50) has a plurality of induction magnets, and each of the induction magnet is correspondingly disposed with each of the induction coil.

13. The contra-rotating generator as recited in one of claims 8 to 12, wherein the first induction unit (40) has a plurality of induction magnets, the second induction unit (50) has a plurality of induction coils, and each of the induction magnet is correspondingly disposed with each of the induction coil.

14. The contra-rotating generator as recited in one of claims 8 to 13, wherein the shaft body (10) further disposes a third induction unit (60) between the first induction unit (40) and the second induction unit (50), and the third induction unit (60) has a plurality of induction coils, the first induction unit (40) and the second induction unit (50) have a plurality of magnets, and each of the magnet is correspondingly disposed with each of the induction coil.
